# EUROPEAN PATENT SPECIFICATION

(11) **EP 0 372 704 B1**
(45) Date of publication and mention of the grant of the patent: **24.02.1993**
(21) Application number: 89311037.9
(22) Date of filing: 26.10.1989
(51) Int. Cl.: F16B 5/04, F16B 19/04

(54) **Rivet with integral heater**
Bolzen mit integriertem Heizgerät
Rivet avec appareil de chauffage intégré

(30) Priority: 02.12.1988 US 278774
(43) Date of publication of application: 13.06.1990
(73) Proprietor: METCAL INC., Menlo Park California 94025 (US)
(72) Inventor: Derbyshire, Rodney L., Menlo Park California 94025 (US)
(74) Representative: Hayward, Denis Edward Peter

(56) References cited:
- US-A- 3 726 553
- US-A- 4 256 945
- US-A- 4 473 914
- US-A- 4 745 264

## Description

The present invention relates to riveting systems and more particularly to blind rivets and associated equipment and a method for heating the rivets at the time of installation or subsequent thereto in order to heat a sealant to achieve fluid-tight joining of materials.

Blind rivets are widely used in industry, commerce and by homeowners. The present invention is particularly applicable to industrial usage although it may be employed in the other areas mentioned above.

In the modern aerospace industry, as an example, blind rivets or bolts as they are sometimes called, are used extensively in assembling airframes and particularly hollow wing sections employed as fuel storage tanks. A problem often develops due to leakage around the rivets. As in other blind rivet installations for fastening together two pieces of metal or other materials such as composites, the rivet, which may be of metal or a composite, is inserted in aligned holes of the plates or members to be joined, and a center shaft or pin of the rivet, which extends through to the distal end of the rivet on the blind side, is clamped in jaws and pulled until the distal end of the rivet is upset to form a head, whereby, the plates to be joined become clamped between the distal upset region and a rivet head formed on the proximal end of the rivet.

In the above example, the rivet-hole combination, although closely toleranced, often leaves small spaces around the rivets allowing drippage of fuel usually at a very slow but still undesirable rate.

The above example is just one use for blind rivets where liquid or even fluid-tight performance is desired if not required. Assembly of any structure requiring fluid-tight construction with blind rivets is a ready candidate for the improvement provided by the present invention.

In accordance with the present invention, there is provided a rivet or bolt having a head and a shank portion extending from the head which shank portion is to pass through aligned holes in members to be connected, characterised by a circumferential coating of a ferromagnetic material around a portion of the rivet and means for supplying or connecting an a.c. electric current to generate a field in the ferromagnetic coating to thereby generate sufficient heat to activate a heat-activatable sealant disposed against the rivet shank, the temperature of activation of the sealant being below the Curie temperature of the ferromagnetic material.

In a preferred embodiment, if the rivet is a blind rivet it may have a head region, adjacent to where the insertion tool is clamped to the rivet during insertion and/or activation, that is coated with a ferromagnetic material, such as Alloy 42. The insertion tool may supply a.c. electric current, e.g. inductively, to heat the ferromagnetic material by electrical resistance heating, the heat thus generated being conducted through the rivet to a region of the rivet shank coated with the heat-activated sealant. The sealant is thus heated and melted and/or cured to provide a fluid-tight bond between the rivet and the adjacent surfaces of the member or members through which the rivet extends.

A temperature self-regulating aspect is achieved based on the fact that all ferromagnetic materials have a Curie temperature such that as it is approached the material loses its ferromagnetic properties. If solely resistive heating is employed then the principles of operation are as set forth in U.S. Patent No. 4,256,945, with or without the optional copper layer described therein. If inductive coupling is employed then, as the ferromagnetic material becomes substantially non-magnetic, the induced current flow is reduced and the rivet cools, see U.S. Patent No. 4,745,264. Thus the temperature of such a system cycles in a narrow range about the effective Curie temperature of the ferromagnetic material. The effective Curie temperature refers to the temperature at which the material becomes substantially paramagnetic as opposed to totally non-magnetic. The difference between absolute Curie temperature and effective Curie temperature is a function of the material and may be a few degrees or as much as 100°C. By choosing a ferromagnetic material having a Curie temperature safely above the curing or activation temperature of the sealant, the seal is effected but, just as important, the sealant is not subject to excessive and very likely destructive heating.

The term "sealant" as used herein refers to any material that upon heating can form a fluid-tight bond by simple melting or by curing or both; and includes glues, mastics, resins, epoxies and the like. Materials that may be employed are Dynamold, Inc.'s moldable shim material MS-26 or DMS-4-828.

In a specific embodiment of the present invention, the blind rivet has a shank in the form of a tubular sleeve integral with a shaped rivet head that remains on the accessible side of the structure with the shank sleeve extending through aligned holes of members to be joined. The shank sleeve has a sealant on its outer surface and, if desired, on its inner hollow surface. The shaped rivet head has a ferromagnetic coating over at least that region that comes either in contact with or closely adjacent to the jaws or anvil of the insertion tool. If magnetic coupling is employed, a coil may be wound about a region of the anvil or jaws close to the ferromagnetic material. Thus upon energization of the coil with preferably high frequency current, typically radio frequencies and preferably frequencies of 8 MHz to 20 MHz, eddy currents and hysteresis heating of the ferromagnetic material results in heating of the rivet head and by conduction the sleeve. It should be noted that a ferromagnetic coating may also be applied to the activating pin which extends through the rivet and bears the head employed to upset the hollow rivet shank at the blind side of the structure.

In operation, the blind rivet of the embodiment just described is inserted into the hole and the riveting or application tool actuated to complete the riveting. Thereafter, either immediately or at a later time the coil associated with the application tool, or with a separate tool, is energized and the heater is energized to activate the sealant and produce a fluid-tight coupling.

Accordingly, the present invention further provides a method of sealing a hole that contains a rivet or bolt, by the application of a heat-activatable sealant around the rivet shank, characterised in that the heat for activating the sealant is generated by generation of a field in a ferromagnetic material coating on the rivet by means of an a.c. electric current, the Curie temperature of the ferromagnetic material being above the activation temperature of the sealant.

The rivets of the present invention may be employed with structures fabricated from advanced composite or non-metallic materials, for instance, KEVLAR (Registered Trade Mark) and carbon fiber reinforced epoxy resin systems. See also Advanced Composite Materials, Edited by D.J. DeRenzo, Noyes Data Corporation, pp 573-577. Since such materials are not necessarily good heat conductors, the head of such a rivet is preferably quite large so as to soak the materials in heat, that is, develop large areas of heated composite material whereby the heat necessary to activate the sealant not only can be developed, but can be conveyed to the sealant in a reasonable length of time.

Arrangements according to the invention will now be described in more detail, by way of example, and with reference to the accompanying drawings, in which:-
Figures 1-3 illustrate a prior art rivet firstly in side elevation and then in two stages of use;
Figure 4 illustrates in elevation a rivet in accordance with the present invention before it has been upset;
Figure 5 illustrates the rivet of Figure 4 after it has been upset;
Figure 6 illustrates an embodiment employing direct circuit connection instead of an inductive coil; and
Figure 7 illustrates a rivet modified specifically for use with structures made from less heat conductive materials.

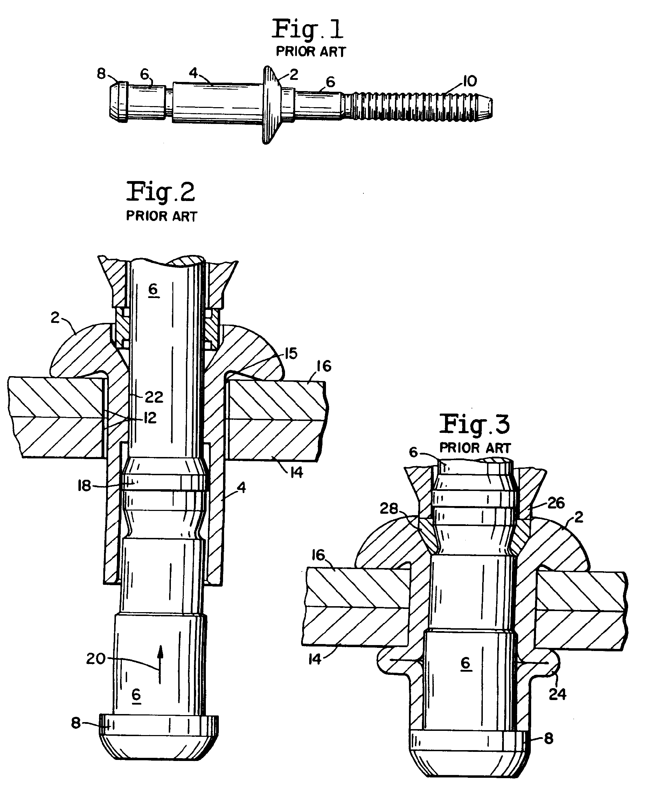

Referring now specifically to Figure 1 of the accompanying drawings, there is illustrated one of several types of standard prior art blind rivets. The rivet has a head 2 and an integral deformable shank in the form of a cylindrical sleeve 4 in axial alignment with the head. An activating pin 6 extends through the sleeve and has an enlarged head 8 at the end of the pin 6 remote from the rivet head 2. The pin 6 terminates at its opposite end remote from the head 8 in a grippable tail having a series of threads or circumferential grooves 10 adapted to be engaged by a set of jaws on the activation tool as is illustrated subsequently.

Figure 2 of the accompanying drawings illustrates the prior art rivet located in aligned holes through two members to be joined. It is noted that the shank or sleeve 4 of the rivet is spaced, space 15, from the walls 12 of the aligned holes through plates 14 and 16 to be joined. The pin 6 has an enlarged intermediate region or band 18 constituting a breakneck which when the pin 6 is pulled in the direction of arrow 20 enters a region 22 of sleeve 4 of reduced internal diameter so as to expand the sleeve 4 to fill the space 15 between the sleeve 4 and the walls of the holes in the plates 14 and 16 and also close any space that may exist between pin 6 and the sleeve 4. The head 8 engages the blind end of the rivet shank or sleeve 4 and upsets or buckles it, as at 24. An anvil or chuck 26, a part of the activation tool, presses a deformable retaining lock collar 28 into a generally conical recess in the rivet head 2 around the pin 6 to secure the position of the head 2 along the pin 6.

Referring to the expansion of the sleeve 4 to seal the space 15, quite often a fluid-tight seal is not obtained or if initially obtained, not maintained. In order to overcome this problem, the blind rivet is modified according to the present invention to provide a temperature self-regulating heater to actuate a temperature-activatable sealant also included in or on the modified rivet.

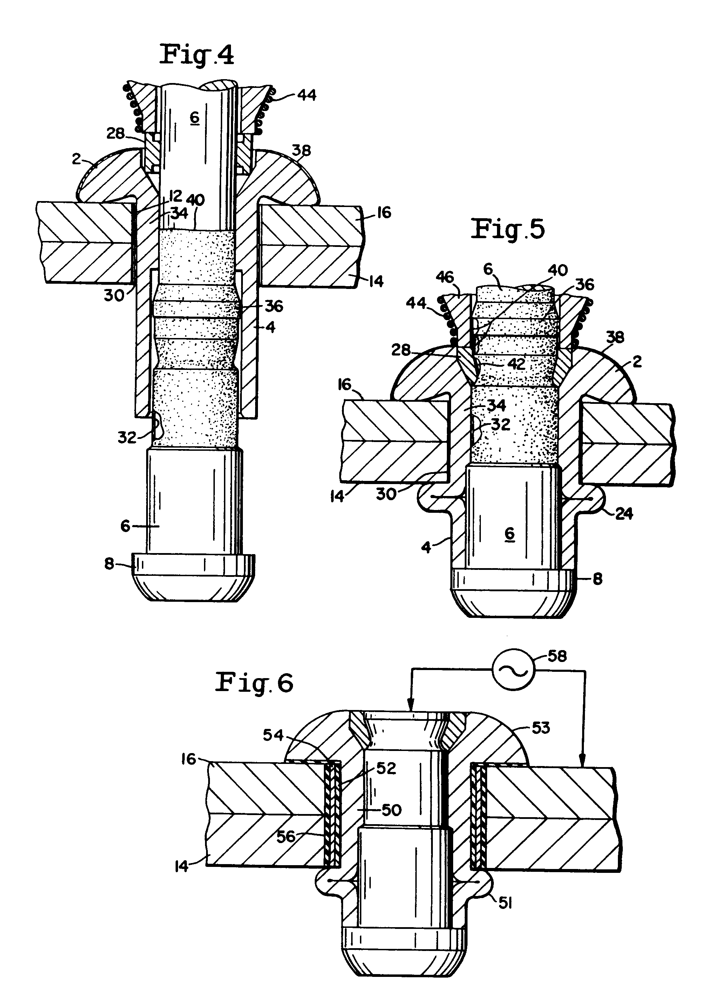

Referring now specifically to Figures 4 and 5 of the accompanying drawings, there is illustrated the blind rivet of Figures 2 and 3 modified in accordance with the present invention. The rivet shank or sleeve 4 in the region disposed within the aligned holes through plates 14 and 16 has a layer 30 of heat-activatable sealant on its external surface located so that upon the sleeve being expanded upon completion of the insertion procedure, see Figure 5 specifically, the sealant is in contact with the sides 12 of the aligned holes and the sleeve 4. A layer 32 of sealant covers the region of the pin 6 that upon completion of insertion of the blind rivet is disposed in the region 34 of reduced internal diameter of the sleeve 4, such region being radially aligned with the region of the sealant 30.

The head 2 of the rivet has a coating 38 of ferromagnetic material. The intermediate band or breakneck 36 of the pin 6 and the region of the pin above and below the breakneck as viewed in the Figures, regions 40 and 42, may also be so coated. To energize the heater, a coil 44 is wound around the nose piece 46 of an otherwise conventional application tool.

Little, if any, modification of the rivet is required. The coating thicknesses are measured in mils or tenths of mils (in the range of tens of m to m) and thus do not interfere with normal operation of the rivet. Selection of rivet materials may be changed to increase, if desired, the electrical conductivity of the metals of the rivets to increase the heater autoregulating ratios as explained in Patent No. 4,256,945. Alternatively, the heater may operate as one without a highly electrically conductive layer.

In practice, the blind rivet of Figure 4 is inserted in the aligned holes of the members to be joined and by means of an application tool.is caused to assume the configuration of Figure 5. When it is desired to activate the sealant 30, and the sealant 32 if provided, the coil 44 is connected across a high frequency constant current source to induce electric current to flow in the ferromagnetic layers 38, 40 and 42 and generate sufficient heat for conduction through the pin 6 and sleeve 4 to cure the sealant layer or layers. If a lock collar of a ferromagnetic material having appropriate Curie temperature and strength is available, the lock collar 28 may be of such a ferromagnetic material. As to the high frequency current, at present a frequency of 13.56 MHz is preferred

The particular blind rivet illustrated in Figures 2 and 3 is that illustrated in Figures 8 and 10 of U.S. Patent No. 4,432,679 and that illustrated in Figures 4 and 5 is a modification thereof. It should be noted that the present invention may be applied to many other configurations of blind rivets and bolts. An example of another such rivet is found in Figure 1 of U.S. Patent No. 4,432,679. U.S. Patents Nos. 4,473,914, 4,163,311 and 3,726,553 are examples of other configurations to which the present invention is applicable. The important consideration is that conventional blind rivets and bolts can readily be adapted to incorporate heaters in accordance with the present invention, as can the actuating tool be adapted to supply the necessary electric current. Further, the invention is not applicable to blind rivets only, since the same problems arise with rivets such as are disclosed in U.S. Patents 3,425,259 and 3,726,553. Thus, although the uses to which blind rivets are usually applied are more susceptible to the problems discussed herein, the invention is of broader utility.

Referring now specifically to Figure 6 of the accompanying drawings, there is illustrated in partial section a rivet to be heated by direct electrical circuit connection rather than by an induced current.

The electrically conductive shank or sleeve 50 of the rivet has three outer coatings, an innermost coating 52 of a thermally and electrically conductive heat-activatable sealant, an intermediate coating 54 of ferromagnetic material and an outer coating 56 of a non-conductive heat-activatable sealant.

High frequency current is applied to the two ends of the sleeve 50 from a constant current high frequency source 58; at the remote end via the plates 14 and 16 to the upset 51 and at the near end directly via the rivet pin. In this case the accessible rivet head 53 is insulated from the plates. The ferromagnetic layer provides a pronounced skin effect at the frequency of operation confining the majority of current to the layer 54. Upon approach to Curie temperature of layer 54, heating decreases; but this is at a temperature above the activation temperature of the sealant. It is is to be noted that the thermally and electrically conductive inner sealant layer is a part of the heater since, upon approach to Curie temperature of layer 54, the current spreads into the layer 52 as well as the sleeve 50. It is to be understood that the layers 52 and 54 may be replaced with a sealant exhibiting ferromagnetic properties, if one is available having a proper Curie temperature.

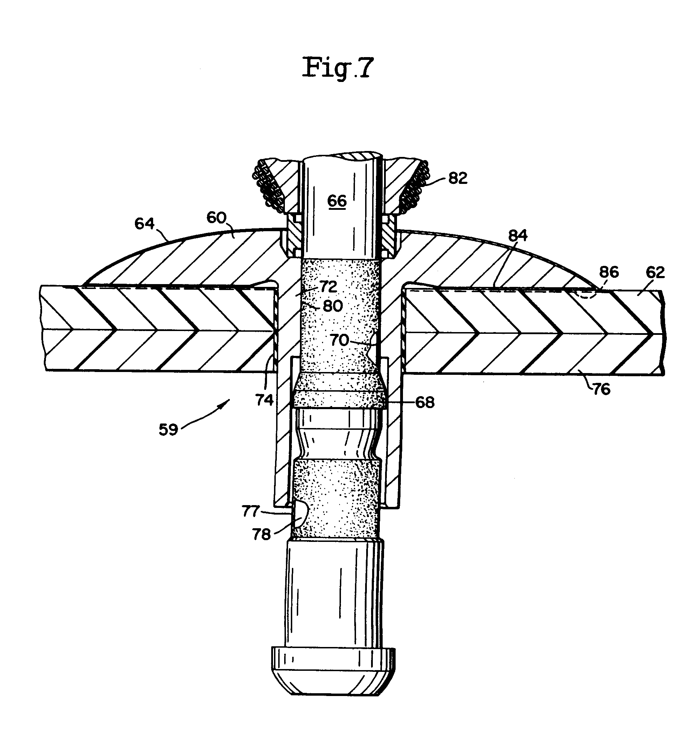

Referring now specifically to Fig. 7 of the accompanying drawings, there is illustrated a blind rivet 59 with a large head 60 on the accessible side of the structure in contact with upper non-metallic plate 62. The head 60 has a coating 64 of ferromagnetic material as does pin 66 at and above the breakneck 68, this latter coating being indicated by reference numeral 70. The rivet shank or sleeve 72 depending downwardly from the head 60 has a coating of sealant 76 in the region of the holes through non-metallic plates 62 and 76. Sealant 77 is also applied over region 78 of the pin 66 which becomes located, see Fig. 5, within the region 80 of the sleeve 72 upon completion of the riveting function.

The main difference between the rivet of Figs. 4 and 5 and the rivet of Fig. 7 is the size of the head of the rivet and, in some instances, the sealant used. Non-metallics such as KEVLAR and the aforesaid epoxy resins are poor heat conductors compared with metals and in order to activate the sealant, the relevant regions of the non-metallic plates are saturated with heat by the large rivet head. It should also be noted that the induction coil, coil 82, is made larger so that the flux coupling the ferromagnetic materials is greatly increased thus increasing the Joule heating of the head 60.

Two further coatings are provided in this embodiment. Coating 84 of ferromagnetic material is applied to the underside of the rivet head 60 and coating 86, designated by a dashed line, is a coating on the upper surface, as viewed in Fig. 7., of the plate 62 and consisting of sealant to bond the rivet head 60 to the plate 62.

It should be noted that some or all of the rivet 59 may be fabricated from a composite or non-metallic material, if desired.

The term "constant current" as used herein is defined in col. 11 line 31, Equation 2 of U.S. Pat. No. 4,752,673.

## Claims

1. A rivet or bolt having a head and a shank portion extending from the head which shank portion is to pass through aligned holes in members to be connected, characterised by a circumferential coating (38) of a ferromagnetic material around a portion of the rivet (2, 4) and means (44) for supplying or connecting an a.c. electric current to generate a field in the ferromagnetic coating to thereby generate sufficient heat to activate a heat-activatable sealant (30) disposed against the rivet shank (4), the temperature of activation of the sealant being below the Curie temperature of the ferromagnetic material.

2. A rivet according to Claim 1 wherein the ferromagnetic coating is provided on the rivet head (2).

3. A blind rivet according to Claim 1 or Claim 2 wherein the rivet shank is a sleeve in which is located a headed actuating pin (6) that can be moved axially within the sleeve by an application tool for upsetting the rivet shank at an axial position that lies on the side of the members to be connected remote from the rivet head, and wherein a layer of heat activatable sealant (32) is provided within the rivet shank sleeve around the actuating pin.

4. A blind rivet according to Claim 3 wherein a coating of ferromagnetic material (38) is provided around the actuating pin within the rivet shank sleeve.

5. A blind rivet according to any preceding Claim wherein the a.c. electrical current induces a magnetic field in the ferromagnetic coating.

6. A blind rivet according to Claim 5 when dependent on Claim 3 or Claim 4 wherein the a.c. electric current is connected to a coil (44) provided on the application tool (46).

7. A rivet according to any one of Claims 1 to 4 wherein the a.c. electrical current is directly connected to the ferromagnetic coating.

8. A rivet according to Claim 7 wherein the layer of heat-activatable sealant (52) surrounding the rivet shank is electrically-conductive.

9. A method of sealing a hole that contains a rivet or bolt, by the application of a heat-activatable sealant around the rivet shank, characterised in that the heat for activating the sealant is generated by generation of a field in a ferromagnetic material coating on the rivet by means of an a.c. electric current, the Curie temperature of the ferromagnetic material being above the activation temperature of the sealant.

10. A method according to Claim 9 applied to a hole containing a blind rivet of the kind in which the rivet shank is a hollow sleeve in which a headed actuating pin passing through the rivet is moved axially to expand the sleeve into contact with the wall of the hole, and further comprising the step of sealing the passage through the rivet in which the actuating pin lies by means of a heat-activatable sealant activated by heat generated by the passage of a.c. electric current through a ferromagnetic material coating on the actuating pin.

## Patentansprüche

1. Ein Niet oder Bolzen mit einem Kopf und einem Schaftabschnitt, der sich von dem Kopf erstreckt, wobei der Schaftabschnitt zum Einsetzen in miteinander fluchtende Löcher in zu verbindenden Teilen bestimmt ist, gekennzeichnet durch eine Umfangsbeschichtung (38) aus einem ferromagnetischen Material rund um einen Abschnitt des Niets (2, 4) und Mittel (44) zur Einspeisung oder zum Anschluß eines elektrischen Wechselstromes zur Erzeugung eines Feldes in der ferromagnetischen Beschichtung, um so ausreichend Wärme zur Aktivierung eines wärmeaktivierbaren Dichtmittels (30) zu erzeugen, das an dem Nietschaft (4) angebracht ist, wobei die Temperatur der Aktivierung des Dichtmittels unterhalb der Curietemperatur des ferromagnetischen Materials liegt.

2. Ein Niet nach Anspruch 1, dadurch gekennzeichnet, daß die ferromagnetische Beschichtung auf dem Nietkopf (2) vorgesehen ist.

3. Ein Blindniet gemäß Anspruch 1 oder Anspruch 2, wobei der Nietschaft eine Hülse ist, in der ein mit einem Kopf versehener Betätigungsstift (6) angeordnet ist, der axial innerhalb der Hülse durch ein Anbringungswerkzeug bewegbar ist, um den Nietschaft an einer axialen Stelle zu stauchen, die auf der Seite der zu verbindenden Teile entfernt von dem Nietkopf liegt, und daß eine Schicht von wärmeaktivierbarem Dichtmittel (32) innerhalb der Nietschafthülse rund um den Betätigungsstift vorgesehen ist.

4. Ein Blindniet nach Anspruch 3, dadurch gekennzeichnet, daß eine Beschichtung aus ferromagnetischem Material (38) rund um den Betätigungsstift innerhalb der Nietschafthülse vorgesehen ist.

5. Ein Blindniet nach einem der vorhergehenden Ansprüche, dadurch gekennzeichnet, daß der elektrische Wechselstrom ein magnetisches Feld in der ferromagnetischen Beschichtung induziert.

6. Ein Blindniet gemäß Anspruch 5, wenn dieser auf Anspruch 3 oder 4 bezogen ist, dadurch gekennzeichnet, daß der elektrische Wechelstrom an eine Spule (44) angeschlossen ist, die an dem Anbringungswerkzeug (46) vorgesehen ist.

7. Ein Niet nach einem der Ansprüche 1 bis 4, dadurch gekennzeichnet, daß der elektrische Wechselstrom direkt an die ferromagnetische Beschichtung angeschlossen ist.

8. Ein Niet nach Anspruch 7, dadurch gekennzeichnet, daß die Schicht aus wärmeaktivierbarem Dichtmittel (52), das den Nietschaft umgibt, elektrisch leitend ist.

9. Ein Verfahren zur Abdichtung eines Loches, der einen Niet oder einen Bolzen enthält, durch Anwendung eines wärmeaktivierbaren Dichtmittels rund um den Nietschaft, dadurch gekennzeichnet, daß die Wärme zur Aktivierung des Dichtmittels erzeugt wird durch Erzeugung eines Feldes in einer Beschichtung aus ferromagnetischem Material auf dem Niet mittels eines elektrischen Wechselstromes, wobei die Curietemperatur des ferromagnetischen Materials oberhalb der Aktiviertemperatur des Dichtmittels liegt.

10. Ein Verfahren nach Anspruch 9, angewendet auf ein Loch, das einen Blindniet der Art enthält, bei welcher der Nietschaft eine hohle Hülse ist, in der ein mit einem Kopf versehener Betätigungsstift, der sich durch den Niet erstreckt, axial bewegt wird, um die Hülse auszudehnen und mit der Wandung des Loches in Kontakt zu bringen, und weiter enthaltend den Schritt des Abdichtens des Durchlasses durch den Stift, in dem der Betätigungsstift liegt, mittels eines wärmeaktivierbaren Dichtmittels, das durch Wärme aktiviert wird, die durch Durchgang eines elektrischen Wechselstromes durch eine Beschichtung aus ferromagnetischem Material auf dem Betätigungsstift erzeugt wird.

## Revendications

1. Un rivet ou boulon présentant une tête et une partie de corps s'étendant depuis la tête, cette partie de corps étant destinée à passer à travers des trous alignés ménagés dans des organes destinés à être reliés, caractérisé par un revêtement circonférentiel (38) réalisé en matériau ferromagnétique, situé autour d'une partie du rivet (2, 4) et des moyens (44) pour amener ou réaliser une connexion à une source de courant électrique alternatif, pour produire un champ dans le revêtement ferromagnétique, de manière à produire suffisamment de chaleur pour activer un matériau d'étanchéité (30) susceptible d'être activé thermiquement, disposé contre le corps de rivet (4), la température d'activation du matériau d'étanchéité étant inférieure à la température du point de Curie du matériau ferromagnétique.

2. Un rivet selon la revendication 1, dans lequel le revêtement ferromagnétique est prévu sur la tête de rivet (2).

3. Un rivet aveugle selon la revendication 1 ou 2, dans lequel le corps de rivet est un manchon dans lequel se situe une tige d'actionnement à tête (6), qui peut être déplacée axialement à l'intérieur du manchon, suite à l'application d'un outil servant à positionner le corps de rivet dans une position axiale, se situant sur le côté des organes destinés à être reliés qui est éloigné de la tête de rivet et dans lequel une couche de matériau d'étanchéité (32) susceptible d'être activé sous l'effet de la chaleur est prévue à l'intérieur du manchon de corps de rivet, autour de la tige d'actionnement.

4. Un rivet aveugle selon la revendication 3, dans lequel un revêtement de matériau ferromagnétique (38) est prévu autour de la tige d'actionnement, à l'intérieur du manchon de corps de rivet.

5. Un rivet aveugle selon l'une quelconque des revendications précédentes, dans lequel le courant électrique alternatif induit un champ magnétique dans le revêtement ferromagnétique.

6. Un rivet aveugle selon la revendication 5, en combinaison de la revendication 3 ou 4, dans lequel la source de courant électrique alternatif est reliée à une bobine (44) prévue sur l'outil d'application (46).

7. Un rivet selon l'une quelconque des revendications 1 à 4, dans lequel la source de courant électrique alternatif est directement reliée au revêtement ferromagnétique.

8. Un rivet selon la revendication 7, dans lequel la couche de matériau d'étanchéité (52) susceptible d'être activé sous l'effet de la chaleur, entourant le corps de rivet, est conductrice de l'électricité.

9. Un procédé d'étanchéisation d'un orifice qui contient un rivet ou un boulon, grâce à l'application d'un matériau d'étanchéité susceptible d'être activé sous l'effet de la chaleur et situé autour du corps de rivet, caractérisé en ce que le chaleur servant à activer le matériau d'étanchéité est produite grâce à la production d'un champ dans un revêtement en matériau ferromagnétique situé sur le rivet, au moyen d'un courant électrique alternatif, la température du point de Curie du matériau ferromagnétique étant supérieure à la température d'activation du matériau d'étanchéité.

10. Un procédé selon la revendication 9, appliqué à un orifice contenant un rivet aveugle du type dans lequel le corps de rivet est un manchon creux, dans lequel une tige d'actionnement à tête traversant le rivet est déplacée axialement pour expandre le manchon de manière à venir en contact avec la paroi de l'orifice et comprenant en outre l'étape d'étanchéisation du passage ménagé dans le rivet, dans lequel se situe la tige d'actionnement, au moyen d'un matériau d'étanchéité susceptible d'être activé sous l'effet de la chaleur qui est activé par de la chaleur produite par le passage d'un courant électrique alternatif dans un revêtement en matériau ferromagnétique, situé sur la tige d'actionnement.
